# FASCICULE DE BREVET EUROPEEN

(11) **EP 1 623 659 B1**
(45) Date de publication et mention de la délivrance du brevet: **27.06.2007**
(21) Numéro de dépôt: 05291669.9
(22) Date de dépôt: 03.08.2005
(51) Int. Cl.: A47J 27/20

(54) **Moule pour la cuisson de produit à cuire, tel que des jambons, et ensemble de moules constitué d'une pluralité de tels moules montés sur un même châssis**
Form zum Kochen von Nahrungsmitteln wie Schinken und Anordnung mehrerer dieser an einem Gestell angebrachten Formen
Mould for cooking food, such as ham, and assembly made of a plurality of said moulds mounted on a frame

(30) Priorité: 05.08.2004 FR 0408675
(43) Date de publication de la demande: 08.02.2006
(73) Titulaire: ARMOR INOX SA, F-56430 Mauron (FR)
(72) Inventeur: Marquet, Olivier, 56430 Mauron (FR); Cadoret, Bernard, 56430 Mauron (FR)
(74) Mandataire: Maillet, Alain

(56) Documents cités:
- EP-A- 0 638 270
- GB-A- 260 384
- US-A- 5 921 171
- US-B1- 6 761 108

## Description

La présente invention concerne un moule pour la cuisson de produit à cuire, tel que des jambons, ledit moule comprenant un récipient constitué d'une virole et d'un fond. Elle concerne également un ensemble de moules pour la cuisson de produit à cuire, tel que des jambons, constitué d'une pluralité de moules montés sur un même châssis, chacun desdits moules comprenant un récipient constitué d'une virole et d'un fond.

On connaît déjà des ensembles empilables de récipients destinés à contenir des produits alimentaires pendant leur cuisson, chaque ensemble étant essentiellement constitué d'éléments longitudinaux qui forment des récipients et, éventuellement des supports de récipient, et qui sont disposées les unes à côté des autres. A titre d'exemple, les produits alimentaires à cuire dans de tels ensembles sont des jambons, les goulottes jouant alors également le rôle de moules.

On connaît déjà de tels ensembles empilables destinés à la cuisson industrielle des jambons et on pourra se reporter utilement aux documents de brevet EP-A-625 325 et EP-A-638 270.

Dans le premier document cité ci-dessus, l'ensemble empilable décrit est essentiellement constitué de goulottes longitudinales qui sont montées sur un cadre lui-même constitué, d'une part, de deux plaques de renfort transversales respectivement reliées aux extrémités frontales des goulottes et, d'autre part, de deux plaques longitudinales. Des piétements sont montés sur les plaques longitudinales et sont prévus pour permettre le gerbage des ensembles l'un sur l'autre.

Selon une variante de réalisation décrite dans ce document EP-A-625 325, sous chaque goulotte est prévu un couvercle. Lorsque deux ensembles sont empilés, le couvercle d'une goulotte de l'ensemble supérieur est logé dans la goulotte correspondante de l'ensemble inférieur. Ainsi, le couvercle de l'ensemble supérieur presse les produits à cuire qui se trouvent dans la goulotte de l'ensemble inférieur.

Dans le document EP-A-638 270, il est décrit un ensemble empilable tel qu'il vient d'être décrit mais dont chaque goulotte est pourvue d'un fond supplémentaire sur lequel repose normalement le produit à cuire, un ressort étant prévu entre le fond de la goulotte et ledit fond supplémentaire. Ces moyens permettent d'adapter la force de pressage du couvercle sur le produit à cuire en cours de cuisson.

Dans ce mode de réalisation particulier dans lequel le fond est mobile et sollicite, par l'intermédiaire d'un ressort, le produit à cuire pour le compresser, le produit à cuire est mis en place alors que le fond est dans sa position haute si bien qu'il peut dépasser au-dessus des bords supérieurs des goulottes. Au moment où l'on pose l'ensemble empilable supérieur et que le couvercle entre en contact avec ces bords supérieurs, le produit à cuire peut être pincé entre ces bords supérieurs et les bords du couvercle. Or, ce produit à cuire, s'il est conditionné sous vide, est enfermé à l'intérieur d'une enveloppe fermée étanche. Le pincement évoqué ci-dessus peut alors entraîner la déchirure de cette enveloppe, laquelle laisse passer alors de l'air, ce qui rend le produit inutilisable, d'où des pertes.

Le but de la présente invention est de résoudre ce problème particulier.

Pour ce faire, la présente invention concerne un moule pour la cuisson de produit à cuire, tel que des jambons, ledit moule comprenant un récipient constitué d'une virole et d'un fond.

Selon une caractéristique de l'invention, le volume défini par la virole et ledit fond peut être diminué à partir d'un volume de repos par action sur ladite virole.

Selon un mode avantageux de la présente invention, ladite virole est apte à être déplacée en translation verticale par rapport audit fond à partir d'une position de repos vers une autre position où le volume défini par ledit récipient est inférieur au volume défini par ledit récipient dans ladite position de repos de ladite virole.

Avantageusement, ledit moule comporte des moyens de rappel de ladite virole dans ladite première position. Ces moyens de rappel sont par exemple constitués de ressorts fixés, d'une part, à ladite virole et, d'autre part, à un châssis que comporte ledit moule.

Selon une autre caractéristique de l'invention, il comporte un couvercle prévu, d'une part, pour coiffer ledit récipient et, d'autre part, pour coopérer avec ladite virole afin que ladite virole puisse prendre ladite autre position.

Selon un autre mode de la présente invention par lequel ledit moule est du type prévu pour être gerbable, ledit moule comporte un couvercle prévu, d'une part, pour coiffer le récipient d'un autre moule identique placé sous ledit moule et, d'autre part, pour coopérer avec ladite virole du récipient dudit autre moule afin que ladite virole puisse prendre ladite autre position.

Selon une autre caractéristique de l'invention, ledit fond est pourvu de moyens pour presser le produit à cuire contenu dans ledit récipient coiffé par un couvercle. Avantageusement, ledit fond est mobile en translation verticale et est soumis à l'action d'un ressort de pressage fixé, d'une part, audit fond et, d'autre part, à un châssis que comporte ledit moule.

Avantageusement, ladite virole comporte, dans sa partie supérieure, un espace prévu pour permettre le passage d'une poche à exsudats d'une enveloppe dans laquelle se trouve le produit à cuire.

La présente invention concerne également un ensemble de moules pour la cuisson de produit à cuire, tel que des jambons constitué d'une pluralité de moules montés sur un même châssis, chacun desdits moules comprenant un récipient constitué d'une virole et d'un fond. Il est caractérisé en ce que le volume défini par la virole et ledit fond de chacun desdits moules peut être diminué à partir d'un volume de repos par action sur ladite virole.

Selon un mode de réalisation avantageux, la virole du récipient de chacun desdits moules est apte à être déplacée en translation verticale par rapport au fond dudit récipient à partir d'une position de repos vers une autre position où le volume dudit récipient est inférieur au volume dudit récipient dans ladite position de repos de ladite virole.

Selon une autre caractéristique de l'invention, ledit ensemble de moules comportant des moyens de rappel de chacune desdites viroles dans ladite première position. Par exemple, lesdits moyens de rappel sont constitués de ressorts fixés, d'une part, à ladite virole correspondante et, d'autre part, au châssis dudit ensemble de moules.

Selon un autre mode de réalisation de la présente invention, lesdites viroles des moules dudit ensemble sont solidaires les unes des autres, lesdits moyens de rappel étant alors constitués de moyens communs auxdites viroles et formés d'au moins un ressort fixé, d'une part, à l'ensemble desdites viroles et, d'autre part, au châssis dudit ensemble de moules.

Selon une autre caractéristique de l'invention, le fond de chacun desdits moules dudit ensemble est pourvu de moyens pour presser le produit à cuire contenu dans ledit récipient coiffé par un couvercle.

Selon un mode de réalisation dans lequel chaque moule est du type prévu pour être gerbable, ledit ensemble est en outre caractérisé en ce que, correspondant à chaque récipient, il comporte un couvercle prévu, d'une part, pour coiffer le récipient correspondant d'un autre ensemble de moules identique placés sous ledit ensemble de moules et, d'autre part, pour coopérer avec la virole du récipient correspondant dudit autre ensemble de moules afin que ladite virole puisse prendre ladite autre position.

Selon une autre caractéristique de l'invention, le fond de chacun desdits moules dudit ensemble est pourvu de moyens pour presser le produit à cuire contenu dans ledit récipient coiffé par un couvercle. Avantageusement, le fond de chacun desdits moules dudit ensemble est mobile en translation verticale et est soumis à l'action d'un ressort de pressage fixé, d'une part, audit fond et, d'autre part, au châssis dudit ensemble de moules.

Selon un mode de réalisation dans lequel les fonds desdits moules dudit ensemble sont solidaires les uns des autres, lesdits moyens de pressage étant alors constitués de moyens communs auxdits fonds et formés d'au moins un ressort de pressage fixé, d'une part, à l'ensemble desdits fonds et, d'autre part, au châssis dudit ensemble de moules.

Avantageusement, la virole de chacun desdits moules dudit ensemble comporte, dans sa partie supérieure, un espace prévu pour permettre le passage d'une poche à exsudats d'une enveloppe dans laquelle se trouve le produit à cuire.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue d'un moule selon un premier mode de réalisation de la présente invention,
Les Figs. 2 à 6 sont des vues d'un moule selon un autre mode de réalisation de la présente invention dans des positions respectives de la virole dudit moule.

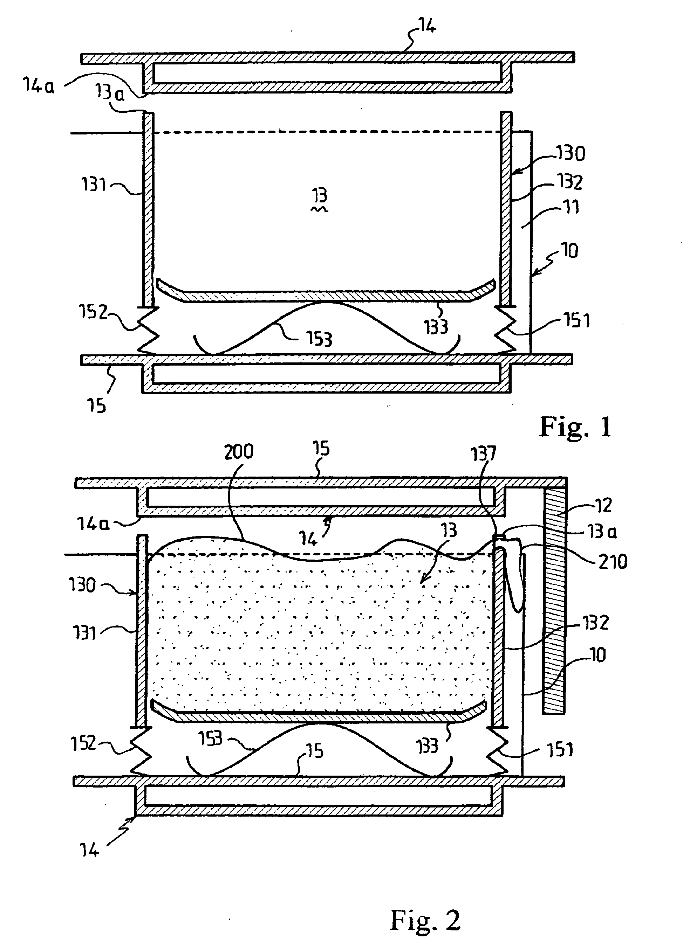

Le moule qui est représenté à la Fig. 1 comprend essentiellement un châssis 10, par exemple constitué d'éléments formant cadre, comme la paroi 11.

Il comporte un récipient 13 comportant, d'une part, une virole 130 dont on voit ici deux parois verticales latérales 131 et 132 et, d'autre part, un fond 133. Les parois verticales 131 et 132 sont montées sur le châssis 10 de manière à pouvoir être déplacées en translation verticale par rapport audit fond 133 à partir d'une position haute dite de repos montrée à la Fig. 1 et d'autres positions basses. Dans la position haute de la virole 130, le volume défini par le récipient 13 est maximal alors qu'il est plus faible dans les autres positions, dites basses.

Le moule représenté à la Fig. 1 comporte encore un couvercle 14 qui est prévu, d'une part, pour pouvoir coiffer le récipient 13 et, d'autre part, pour coopérer avec la virole 130 de manière à ce que celle-ci puisse se déplacer verticalement à partir de sa position de repos et atteindre une autre position où le volume défini par le récipient 13 est diminué. Pour ce faire, les bords 14a du couvercle 14 sont prévus pour venir en appui contre les bords supérieurs de la virole 130.

Le fonctionnement du moule qui est représenté à la Fig. 1 est le suivant. Lorsque la virole 130 est dans sa position haute de repos, on place le produit à cuire dans le récipient 130. Du fait que le volume du récipient 13 est maximal, il est possible que le produit à cuire le remplisse sensiblement à un niveau inférieur au niveau supérieur de la virole 130. Puis, on met en place le couvercle 14 de manière à ce qu'il coiffe le récipient 13 tout en exerçant une action verticale sur la virole 130. Du fait que le produit à cuire ne se trouve pas au-dessus du niveau supérieur de la virole 130, les risques de pincement sont nuls. Il résulte de l'action verticale du couvercle 14 sur la virole 130 une diminution du volume défini par le récipient 13 jusqu'à ce que la virole 130 arrive à sa position extrême basse et que le produit à cuire occupe tout le volume du récipient 13 compris entre le fond 133 et le couvercle 14. La cuisson peut alors commencer.

Dans le mode de réalisation qui est représenté à la Fig. 1, le fond 133 est prévu pour pouvoir être déplacé verticalement à l'intérieur du récipient 13 entre les parois latérales 131 et 132 de la virole 130.

Le moule représenté à la Fig. 1 comporte encore des ressorts de rappel 151 et 152 qui sont solidaires, par une première extrémité, au châssis 10, par exemple par l'intermédiaire d'un appui 15 et, par son autre extrémité, aux parois verticales 131 et 132 de manière à rappeler la virole 130 dans sa position haute de repos. Dans le schéma de la Fig. 1, les ressorts de rappel 151 et 152 sont des ressorts hélicoïdaux mais on comprendra que d'autres types de ressort peuvent être envisagés dès lors qu'ils exercent une fonction de rappel des parois verticales 131 et 132 dans leur position haute de repos.

Enfin, entre la surface d'appui 15 et le fond 133, est prévu un ressort de compression 153 pour solliciter le fond 133 vers l'intérieur du récipient 13.

A la Fig. 2, on a représenté un autre mode de réalisation d'un moule selon l'invention, ce moule étant prévu pour être gerbable avec d'autres moules identiques. Ainsi, solidaires du châssis 10 et, dans le mode de réalisation représentée, de l'appui 15, sont prévus des pieds 12, par exemple au nombre de quatre, qui, comme on le verra par la suite, servent de butées entre châssis de deux moules gerbés. Dans ce mode de réalisation, le couvercle 14 du moule représenté se trouve sous le récipient 13. Ce couvercle 14 est alors prévu pour coiffer le récipient 13 d'un autre moule identique placé sous ledit moule. Il est également prévu pour coopérer avec ladite virole 130 du récipient 130 dudit autre moule afin que ladite virole puisse prendre une autre position où le volume du récipient correspondant est diminué.

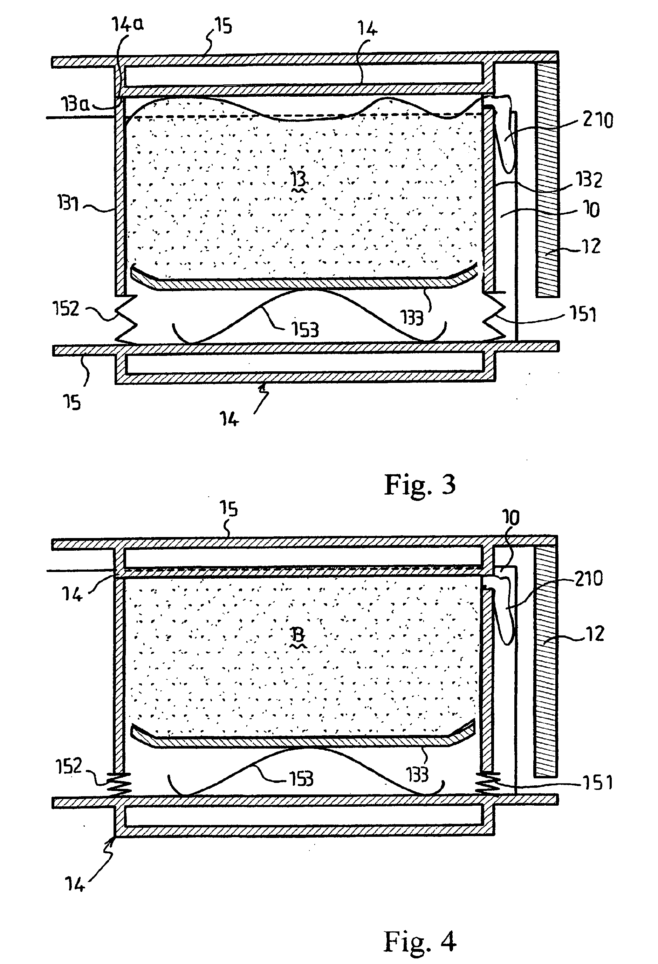

On a représenté à la Fig. 2 (ainsi que sur les Figs. 3 à 6) un autre moule supérieur dont on n'a représenté, par souci de clarté, uniquement le couvercle 14, l'appui 15 et un pied formant butée 12. Les autres éléments du moule qui est représenté à la Fig. 2 ne sont pas modifiés par rapport à ceux du moule de la Fig. 1.

Le fonctionnement d'un moule selon la présente invention et selon la Fig. 2 est maintenant décrit en relation avec les Figs. 2 à 6. Dans ces Figs. 2 à 6, on a également représenté le produit à cuire qui est enfermé dans une enveloppe 200 pourvue d'une poche 210 pour la récupération d'exsudats. Pour la mise en place de cette poche 210, la paroi 132 de la virole 130 comporte une fente 137 qui évite son pincement lors de la fermeture du moule par un couvercle 14.

A la Fig. 2, le moule est au repos. Les parois verticales 131 et 132 de la virole 130 sont dans leur position de repos haute, sollicitées qu'elles sont par les ressorts de rappel 151 et 152. De même, le ressort de compression 153 sollicite le fond 133 qui se retrouve également dans une position haute à l'intérieur du récipient 13 entre les parois latérales 131 et 132. Le volume défini par le récipient 13 est à son maximum. Dans cet état, les produits à cuire peuvent être introduits dans le récipient 13. Les parois latérales 131 et 132 étant dans leur position haute, le produit à cuire ne dépasse pas des bords supérieurs des parois latérales 131 et 132.

A la Fig. 3, le couvercle 14 entre en contact pas ses bords 14a avec les bords supérieurs 13a des parois latérales 131 et 132 de la virole 130. Puisque le produit à cuire ne dépasse pas, il n'y a pas de risques de pincement du produit à cuire, ce qui était le but à atteindre. Dans cette position, les ressorts de rappel 151 et 152 commencent à agir, c'est-à-dire à se compresser, notamment sous l'action d'une force verticale exercée par le couvercle 14 du moule supérieur sur la virole 130, si bien que les parois latérales 131 et 132 perdent leur position de repos haute. Le volume défini par le récipient 13 diminue.

A la Fig. 4, le moule supérieur est encore descendu par rapport à la position précédente représentée à la Fig. 3. Dans cette position, le volume défini par le récipient 13 est tel qu'il est entièrement occupé par le produit à cuire lequel est alors en contact avec le couvercle 14. On notera que, dans l'état de la technique, pour arriver à cette situation, il était nécessaire de remplir le récipient d'une quantité de produit à cuire dépassant au-dessus des bords supérieurs des parois latérales 131 et 132, d'où les risques importants de pincement rédhibitoires pour le produit à cuire. C'est donc au moyen du coulissement vertical de la virole 130 que l'invention résout le problème qui était mentionné dans le préambule de la présente description.

Les ressorts de rappel 151 et 152 ont été compressés et le ressort 153 commence lui à agir sur le fond 133 du récipient 13 pour presser le produit à cuire contenu dans le récipient 13.

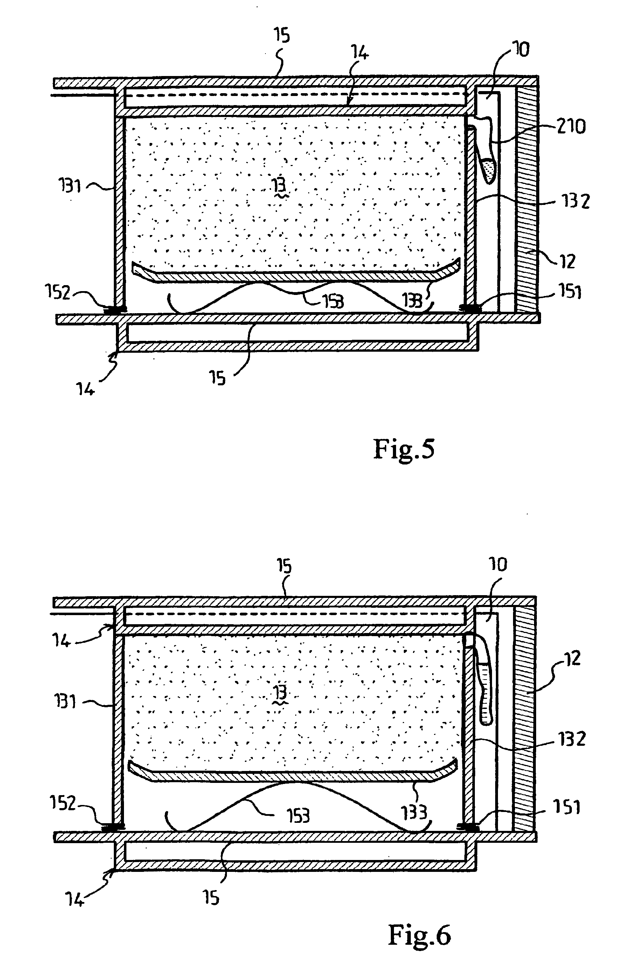

Lorsque le pied formant butée 12 du moule supérieur vient en appui sur l'appui 15 du moule considéré, les ressorts de rappel 151 et 152 sont compressés au maximum. Dans cette position, visible à la Fig. 5, la virole 130 est descendue par rapport au fond 133 mais aussi par rapport au produit à cuire. La virole 130 et le couvercle 14 sont alors immobilisés dans cette position par le pied formant butée 12 qui repose sur l'appui 15 avec une force correspondant au poids des moules supérieurs.

Enfin, la cuisson est mise en oeuvre et là, le ressort de compression 153 agit sur le produit à cuire effectuant ainsi une cuisson sous pression (voir Fig. 6). Pendant la cuisson, les exsudats, du fait de la pression exercée par le ressort de compression 153, sont expulsés dans la poche 210 dont ils sont par la suite récupérés.

On notera que la présente invention concerne également un ensemble de moules constitué de plusieurs moules tels qu'on a précédemment décrit montés les uns à côté des autres sur un même châssis. Ces ensembles de moules sont avantageusement gerbables.

On notera que l'avantage de la présente invention résulte également dans l'utilisation d'un fond mobile 133 pour le récipient 13 qui permet d'éviter des problèmes de centrage d'un moule par rapport à un autre moule lorsque les moyens de compression du produit à cuire sont placés sur les couvercles 14.

On notera encore que l'invention s'applique aussi bien à des moules pour la cuisson de produit à cuire sous forme de blocs qu'un récipient peut contenir en nombre, par exemple douze (et dans ce cas, plusieurs fonds contigus non nécessairement jointifs sont prévus), qu'à des moules pour la cuisson de produits à cuire sous la forme de barres longitudinales qu'un unique récipient peut contenir, par exemple en nombre de cinq (dans ce cas, un seul fond est nécessaire).

Si les parois latérales 131 et 132 des moules d'un ensemble de moules sont solidaires les unes des autres, un seul système de rappel peut être prévu, par exemple constitué de quatre ressorts de rappel tels que les ressorts 151 et 152 montés, par une extrémité, solidaires du support 10 de l'ensemble de moules et, par son autre extrémité, solidaires de l'ensemble des parois latérales 131 et 132.

Enfin, on notera que les couvercles 14 et les fonds 133 peuvent présenter toute forme nécessitée par les circonstances : plane, bombée, etc.

## Revendications

1. Moule pour la cuisson de produit à cuire, tel que des jambons, ledit moule comprenant un récipient (13) constitué d'une virole (130) et d'un fond (133), **caractérisé en ce que** le volume défini par la virole (130) et ledit fond (133) peut être diminué à partir d'un volume de repos par action sur ladite virole.

2. Moule selon la revendication 1, **caractérisé en ce que** ladite virole est apte à être déplacée en translation verticale par rapport audit fond à partir d'une position de repos vers une autre position où le volume défini par ledit récipient est inférieur au volume défini par ledit récipient dans ladite position de repos de ladite virole.

3. Moule selon la revendication 2, **caractérisé en ce que**, ledit moule comporte des moyens de rappel (151,152) de ladite virole dans ladite première position.

4. Moule selon la revendication 3, **caractérisé en ce que** lesdits moyens de rappel sont constitués de ressorts fixés, d'une part, à ladite virole et, d'autre part, à un châssis que comporte ledit moule.

5. Moule selon une des revendications 1 à 4, du type prévu pour être gerbable, **caractérisé en ce qu**'il comporte un couvercle prévu, d'une part, pour coiffer le récipient d'un autre moule identique placé sous ledit moule et, d'autre part, pour coopérer avec ladite virole du récipient dudit autre moule afin que ladite virole puisse prendre ladite autre position.

6. Moule selon une des revendications précédentes, **caractérisé en ce que** ledit fond est pourvu de moyens pour presser le produit à cuire contenu dans ledit récipient coiffé par un couvercle.

7. Moule selon la revendication 6, **caractérisé en ce que** ledit fond est mobile en translation verticale et est soumis à l'action d'un ressort de pressage fixé, d'une part, audit fond et, d'autre part, à un châssis que comporte ledit moule.

8. Moule selon une des revendications précédentes, **caractérisé en ce que** ladite virole comporte, dans sa partie supérieure, un espace prévu pour permettre le passage d'une poche à exsudats d'une enveloppe dans laquelle se trouve le produit à cuire.

9. Ensemble de moules pour la cuisson de produit à cuire, tel que des jambons constitué d'une pluralité de moules montés sur un même châssis, chacun desdits moules comprenant un récipient constitué d'une virole et d'un fond, **caractérisé en ce que** le volume défini par la virole et ledit fond de chacun desdits moules peut être diminué à partir d'un volume de repos par action sur ladite virole.

10. Ensemble de moules pour la cuisson de produit à cuire selon la revendication 9, **caractérisé en ce que** la virole du récipient de chacun desdits moules est apte à être déplacée en translation verticale par rapport au fond dudit récipient à partir d'une position de repos vers une autre position où le volume dudit récipient est inférieur au volume dudit récipient dans ladite position de repos de ladite virole.

11. Ensemble de moules pour la cuisson de produit à cuire selon la revendication 10, **caractérisé en ce que** ledit ensemble de moules comportant des moyens de rappel de chacune desdites viroles dans ladite première position.

12. Ensemble de moules selon la revendication 11, **caractérisé en ce que** lesdits moyens de rappel sont constitués de ressorts fixés, d'une part, à ladite virole correspondante et, d'autre part, au châssis dudit ensemble de moules.

13. Ensemble de moules selon la revendication 11, **caractérisé en ce que** lesdites viroles des moules dudit ensemble sont solidaires les unes des autres, lesdits moyens de rappel étant alors constitués de moyens communs auxdites viroles et formés d'au moins un ressort fixé, d'une part, à l'ensemble desdites viroles et, d'autre part, au châssis dudit ensemble de moules.

14. Ensemble de moules selon une des revendications 9 à 13, **caractérisé en ce que** le fond de chacun desdits moules dudit ensemble est pourvu de moyens pour presser le produit à cuire contenu dans ledit récipient coiffé par un couvercle.

15. Ensemble de moules selon une des revendications 9 à 14, du type prévu pour être gerbable, **caractérisé en ce que**, correspondant à chaque récipient, il comporte un couvercle prévu, d'une part, pour coiffer le récipient correspondant d'un autre ensemble de moules identique placés sous ledit ensemble de moules et, d'autre part, pour coopérer avec la virole du récipient correspondant dudit autre ensemble de moules afin que ladite virole puisse prendre ladite autre position.

16. Ensemble de moules selon une des revendications 9 à 15, **caractérisé en ce que** le fond de chacun desdits moules dudit ensemble est pourvu de moyens pour presser le produit à cuire contenu dans ledit récipient coiffé par un couvercle.

17. Ensemble de moules selon la revendication 16, **caractérisé en ce que** le fond de chacun desdits moules dudit ensemble est mobile en translation verticale et est soumis à l'action d'un ressort de pressage fixé, d'une part, audit fond et, d'autre part, au châssis dudit ensemble de moules.

18. Ensemble de moules selon la revendication 17, **caractérisé en ce que** les fonds desdits moules dudit ensemble sont solidaires les uns des autres, lesdits moyens de pressage étant alors constitués de moyens communs auxdits fonds et formés d'au moins un ressort de pressage fixé, d'une part, à l'ensemble desdits fonds et, d'autre part, au châssis dudit ensemble de moules.

19. Ensemble de moules selon une des revendications 9 à 18, **caractérisé en ce que** ladite virole de chacun desdits moules dudit ensemble comporte, dans sa partie supérieure, un espace prévu pour permettre le passage d'une poche à exsudats d'une enveloppe dans laquelle se trouve le produit à cuire.

## Claims

1. Mould for cooking food, such as ham, the said mould including a container (13) comprising a shell (130) and a base (133), **characterised in that** the volume defined by the shell (130) and the said base (133) can be reduced from a rest volume by acting on the said shell.

2. Mould according to claim 1, **characterised in that** the said shell can be displaced vertically with respect to the said base from a rest position towards another position where the volume defined by the said container is lesser than the volume defined by the said container in the said rest position of the said shell.

3. Mould according to claim 2, **characterised in that** the said mould includes means for returning (151, 152) the said shell to the said initial position.

4. Mould according to claim 3, **characterised in that** the said means for returning comprise springs fixed, on the one hand, to the said shell and, on the other, to a frame formed by the said mould.

5. Mould according to claims 1 to 4, of the type designed to be stackable, **characterised in that** it includes a lid designed, on the one hand, to cover the container of another identical mould placed underneath the said mould and, on the other, to cooperate with the said shell of the container of the said other mould so that the said shell can adopt the said other position.

6. Mould according to one of the preceding claims, **characterised in that** the said base is provided with means for pressing the food contained in the said container covered by a lid.

7. Mould according to claim 6, **characterised in that** the said base is vertically mobile and is subjected to the action of a pressing spring fixed, on the one hand, to the said base and, on the other, to a frame formed by the said mould.

8. Mould according to one of the preceding claims, **characterised in that** the said shell includes, in its upper part, a space designed to allow for the passage of a pocket of exudates from an envelope in which the food is located.

9. Assembly of moulds for cooking food, such as ham, comprising a plurality of moulds mounted on a single frame, each of the said moulds including a container comprising a shell and a base, **characterised in that** the volume defined by the shell and the said base of each of the said moulds can be reduced from a rest volume by acting on the said shell.

10. Assembly of moulds for cooking food according to claim 9, **characterised in that** the shell of the container of each of the said moulds can be displaced vertically with respect to the said base of the said container from a rest position towards another position where the volume of the said container is lesser than the volume of the said container in the said rest position of the said shell.

11. Assembly of moulds for cooking food according to claim 10, **characterised in that** the said assembly of moulds include means for returning each of the said shells to the said initial position.

12. Assembly of moulds according to claim 11, **characterised in that** the said means for returning comprise springs fixed, on the one hand, to the said corresponding shell and, on the other, to the frame of the said assembly of moulds.

13. Assembly of moulds according to claim 11, **characterised in that** the said shells of the moulds of the said assembly interact with one another, the said means of returning then comprising means common to the said shells and formed by at least one spring fixed, on the one hand, to the assembly of the said shells and, on the other, to the frame of the said assembly of moulds.

14. Assembly of moulds according to one of claims 9 to 13, **characterised in that** the base of each of the said moulds of the said assembly is provided with means for pressing the food contained in the said container covered by a lid.

15. Assembly of moulds according to one of claims 9 to 14, of the type designed to be stackable, **characterised in that**, corresponding to each container, it includes a lid designed, on the one hand, to cover the corresponding container of another identical assembly of moulds placed underneath the said assembly of moulds and, on the other, to cooperate with the shell of the corresponding container of the said other assembly of moulds so that the said shell can adopt the said other position.

16. Assembly of moulds according to one of claims 9 to 15, **characterised in that** the base of each of the said moulds of the said assembly is provided with means for pressing the food contained in the said container covered by a lid.

17. Assembly of moulds according to claim 16, **characterised in that** the base of each of the said moulds of the said assembly is vertically mobile and is subjected to the action of a pressing spring fixed, on the one hand, to the said base and, on the other, to the frame of the said assembly of moulds.

18. Assembly of moulds according to claim 17, **characterised in that** the bases of the said moulds of the said assembly interact with one another, the said means for pressing then comprising means common to the said bases and formed by at least one pressing spring fixed, on the one hand, to the assembly of the said bases and, on the other, to the frame of the said assembly of moulds.

19. Assembly of moulds according to one of claims 9 to 18, **characterised in that** the said shell of each of the said moulds of the said assembly includes, in its upper part, a space designed to allow for the passage of a pocket of exudates from an envelope in which the food is located.

## Patentansprüche

1. Form zum Kochen von Nahrungsmitteln wie Schinken , wobei die Form einen Behälter (13) umfasst, welcher von einer Zwinge (13a) und einem Boden (133) gebildet wird, **dadurch gekennzeichnet, dass** das von der Zwinge (13a) und dem Boden (133) definierte Volumen ausgehend von einem Anfangs-Volumen durch Einwirken auf die Zwinge verringert werden kann.

2. Form nach Anspruch 1, **dadurch gekennzeichnet, dass** die Zwinge durch Vertikalverschiebung in Bezug auf den Boden aus einer Anfangs-Position in eine andere Position verschoben werden kann, in der das von dem Behälter definierte Volumen geringer ist als das von dem Behälter definierte Volumen bei in Ruheposition befindlicher Zwinge.

3. Form nach Anspruch 2, **dadurch gekennzeichnet, dass** die Form Rückstellmittel (151, 152) umfasst, die die Zwinge in die erstgenannte Position zurückversetzen.

4. Form nach Anspruch 3, **dadurch gekennzeichnet, dass** die Rückstellmittel aus Federn bestehen, die einerseits an der Zwinge und andererseits an einem die Form tragenden Chassis befestigt sind.

5. Form, die zum Stapeln bestimmt ist, nach einem der Ansprüche 1 bis 4, **dadurch gekennzeichnet, dass** sie einen Deckel umfasst, welcher einerseits dazu bestimmt ist, den Behälter einer anderen, identischen, unter der genannten Form platzierten Form abzudecken und andererseits mit der Zwinge des Behälters der anderen Form zusammenzuwirken, damit die Zwinge die andere Position einnehmen kann.

6. Form nach einem der vorangehenden Ansprüche, **dadurch gekennzeichnet, dass** der Boden mit Mitteln zum Pressen des zu kochenden Produktes in dem mit einem Deckel abgedeckten Behälter versehen ist.

7. Form nach Anspruch 6, **dadurch gekennzeichnet, dass** der Boden vertikal beweglich ist und der Wirkung einer einerseits am Boden und andererseits an einem die Form tragenden Chassis befestigten Druckfeder unterworfen ist.

8. Form nach einem der vorangehenden Ansprüche, **dadurch gekennzeichnet, dass** die Zwinge in ihrem oberen Teil einen Zwischenraum zum Durchlass eines Beutels für Schwitzflüssigkeit aus der Hülle aufweist, in welcher sich das zu kochende Produkt befindet.

9. Formenanordnung zum Kochen von Nahrungsmitteln wie Schinken, die aus einer Vielzahl auf einem Chassis montierter Formen gebildet ist, wobei jede einzelne Form einen aus einer Zwinge und einem Boden bestehenden Behälter aufweist, **dadurch gekennzeichnet, dass** das von der Zwinge und dem Boden jeder der Formen definierte Volumen von einem Anfangs-Volumen durch Einwirken auf die Zwinge verringert werden kann.

10. Formenanordnung zum Kochen von Nahrungsmitteln nach Anspruch 9, **dadurch gekennzeichnet, dass** die Zwinge des Behälters jeder der Formen durch Vertikalverschiebung in Bezug auf den Boden des Behälters aus einer ruhenden Position in eine andere Position verschoben werden kann, in der das von dem Behälter definierte Volumen geringer ist als das von dem Behälter definierte Volumen bei in Ruheposition befindlicher Zwinge.

11. Formenanordnung zum Kochen von Nahrungsmitteln nach Anspruch 10, **dadurch gekennzeichnet, dass** die Formenanordnung Rückstellmittel für jede der Zwingen in die erstgenannte Position umfasst.

12. Formenanordnung nach Anspruch 11, **dadurch gekennzeichnet, dass** die Rückstellmittel aus Federn bestehen, die einerseits an der entsprechenden Zwinge und andererseits an einem die Form tragenden Chassis befestigt sind.

13. Formenanordnung nach Anspruch 11, **dadurch gekennzeichnet, dass** die Zwingen der Formen der genannten Formenanordnung untereinander verbunden sind, wobei die Rückstellmittel dann aus mit den genannten Zwingen verbundenen Mitteln bestehen und wenigstens von einer Feder gebildet werden, welche einerseits an der Konstruktion der Zwingen und andererseits am Chassis der Formenanordnung befestigt ist.

14. Formenanordnung nach einem der Ansprüche 9 bis 13, **dadurch gekennzeichnet, dass** der Boden jeder der Formen der genannten Formenanordnung mit Mitteln zum Pressen des zu kochenden Produktes in dem mit einem Deckel abgedeckten Behälter versehen ist.

15. Formenanordnung nach einem der Ansprüche 9 bis 14, die zum Stapeln vorgesehen ist, **dadurch gekennzeichnet, dass** jeder Behälter einen entsprechenden Deckel umfasst, welcher einerseits dazu bestimmt ist, den entsprechenden Behälter einer anderen, identischen, unter der genannten Formenanordnung platzierten Formenanordnung abzudecken, und andererseits mit der Zwinge des entsprechenden Behälters der anderen Formenanordnung zusammenzuwirken, damit die Zwinge die andere Position einnehmen kann.

16. Formenanordnung nach einem der Ansprüche 9 bis 15, **dadurch gekennzeichnet, dass** der Boden jeder der Formen der genannten Formenanordnung mit Mitteln zum Pressen des zu kochenden Produktes in dem mit einem Deckel abgedeckten Behälter versehen ist.

17. Formenanordnung nach Anspruch 16, **dadurch gekennzeichnet, dass** der Boden jeder der Formen der genannten Formenanordnung in Vertikalverschiebung beweglich und der Wirkung einer einerseits am Boden und andererseits an einem die Form tragenden Chassis befestigten Druckfeder unterworfen ist.

18. Formenanordnung nach Anspruch 17, **dadurch gekennzeichnet, dass** die Böden der Formen der genannten Formenanordnung untereinander verbunden sind, wobei die Mittel zum Pressen dann von mit den Böden verbundenen Mitteln gebildet werden und wenigstens aus einer Druckfeder bestehen, welche einerseits an der Konstruktion der Böden und andererseits am Chassis der genannten Formenanordnung befestigt ist.

19. Formenanordnung nach einem der Ansprüche 9 bis 18, **dadurch gekennzeichnet, dass** die Zwinge jeder Form der genannten Formenanordnung in ihrem oberen Teil einen Zwischenraum zum Durchlass eines Beutels für Schwitzflüssigkeit aus der Hülle aufweist, in welcher sich das zu kochende Produkt befindet.
